# EUROPEAN PATENT APPLICATION

(11) **EP 1 306 786 A2**
(43) Date of publication of application: **02.05.2003**
(21) Application number: 02255094.1
(22) Date of filing: 22.07.2002
(51) Int. Cl.: G06F 17/60

(54) **Project management system**

(30) Priority: 20.07.2001 GB 0117784
(71) Applicant: Start-global Limited, West Midlands, B93 0DX (GB)
(72) Inventor: Jones, Huw Benjamin, Warwickshire, CV35 7NJ (GB); Jones, Stephan Alexander Lewry, Warwickshire, CV8 2DY (GB); Oatridge, Richard Gareth James, Worcestershire, B93 6TR (GB); Jackson, Paul Hadleigh, Warwickshire, CV8 1DY (GB)
(74) Representative: Barnfather, Karl Jon, Dr.

(57) **Abstract**

A computer-based construction project management system, for use in controlling the assembly of structures, including three software sub-systems; a first sub-system that receives data relating to an individual task of a construction project; a second sub-system, for project scheduling, that allows a planner to view and modify the timing and inter-relation of key events and a third sub-system that converts data from the first and/or second sub-systems into a visual three dimensional graphical representation which allocates space in a three dimensional model of the structure to the task, as an event in time.

## Description

### BACKGROUND OF THE INVENTION

This invention relates to a computer-based project and process management system, particularly for use in controlling the assembly of structures.

Major construction and assembly projects can take many years to plan and complete and involve dozens of different and independent contractors employing hundreds of operatives to do the work.

Controlling the work against a defined programme is a problem, particularly where the project is too complex to be envisaged by a person in the detail necessary to ensure efficient control thereof. Although computer based project management systems are well known and used widely including within the construction and processes engineering sectors they are not, in general, able to schedule tasks in an optimal way where these tasks have aspects that are mutually exclusive. For example, on a building site where a multistorey building is being constructed it will not generally be possible for electricians and pipe-fitters to work in the same location. However other trades may be able to share a work area providing jobs are appropriately sequenced. In some instances such problems lead to work being poorly defined, wrongly sequenced and timed.

### SUMMARY OF THE INVENTION

It is an object of the invention to provide an improved computer-based construction project management system, particularly for use in controlling the assembly of structures.

The present system implements the basic concept of: receiving data from contributors relating to a production project, that data including; a job description; a space defined using a co-ordinate system such as a grid indicating where the job is to be carried out; how long it will take and; arranging that data in a order of execution by a predetermined prioritisation schema, attaching a time period to the job and then converting the data into a graphical representation which allows a user to allocate space in a two or three dimensional model to a job.

In one aspect the invention comprises a computer-based project management system for use in controlling the assembly of structures, the system having three software sub-systems; a first sub-system that receives data relating to an individual task of a construction project; a second sub-system, for project scheduling, that allows a planner to view and modify the timing and inter-relation of key events and a third sub-system that converts data from the first and/or second sub-systems into a visual three dimensional graphical representation which allocates space in a two or three dimensional model of the said structure(s) to the task, as an event in time.

The invention offers many advantages; in particular, the ability that users have to visually analyse activities within a selected space. This allows more efficient execution of a project, enabling jobs that would otherwise progress in series to progress at least to some extent in parallel. Increased efficiency and shortened construction time typically result.

The system of the invention is aimed at major project management where numerous independent trades or contractors have to provide input at both the planning and execution stages. It is applicable to a number of project types - the first being construction of major buildings, housing sites, roads etc, but moving with equal applicability into the construction of railways, aerospace, ship-building, rigs, and on to media management, computer service industry. The invention is also applicable to managing processes that involve allocation of resources; for example, beds in hospitals and the reconfiguration of sales areas in retail outlets. This type of process activity requires planned and sequenced implementation of a plurality of tasks with maximised productivity, made available by the reduction of wasted time periods.

### BRIEF DESCRIPTION OF THE DRAWINGS

A specific embodiment of the invention will now be described by reference to the following diagrams and tables in which :-
Table 1 is a contractor priority table,
Tables 2 and 3 detail building description input data,
Table 4 details various definitions,
Figures 1a to 1e show examples of STARTNET™ data entry screens,
Figure 2 is a flow diagram details interactions between a user and the STARTNET ™ sub-system,
Figure 3 shows two examples of a materials entry screen,
Figure 4 is a simplified flow diagram for the STARTNET ™ sub-system,
Figures 5a to 5d show examples of the STARTSITE ™ output data screens,
Figure 6 shows one way in the three sub-systems of the invention may be connected by a network,
Figure 7 is a simplified flow diagram for the STARTPLAN ™ sub-system,
Figure 8 is a simplified flow diagram for the STARTSITE ™ sub-system,
Figure 9 is a flow diagram that shows how a contractor interacts with the system of the invention,
Figure 10 is a flow diagram that shows how a package manager interacts with the system of the invention,

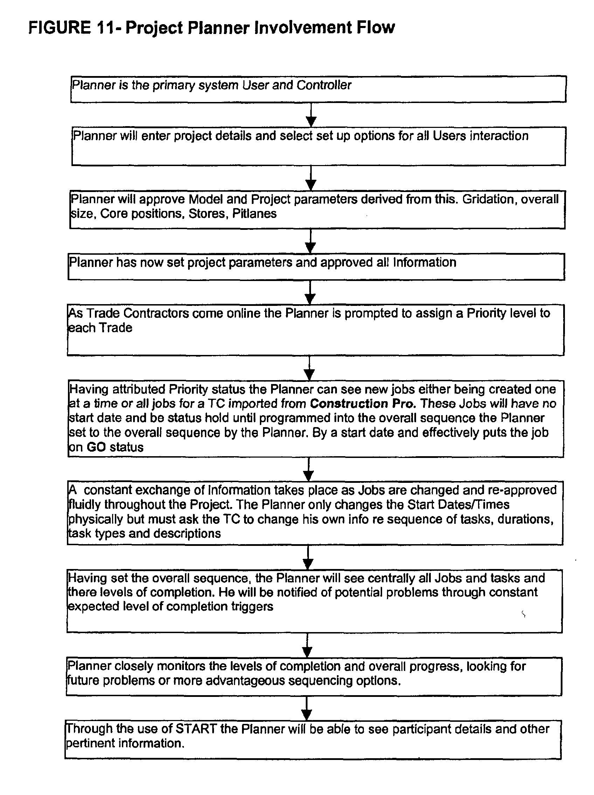

Figure 11 is a flow diagram that shows how a/the project planner interacts with the system of the invention, and

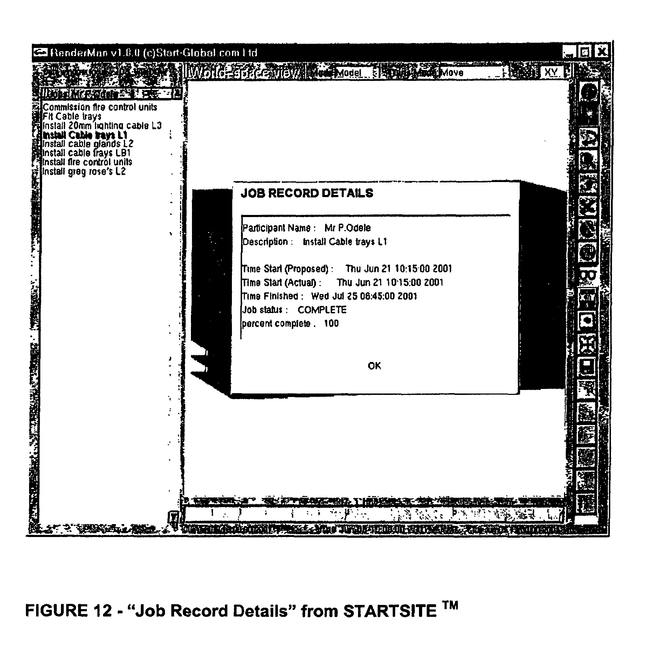

Figure 12 shows a "Job Record Details" dialogue box from STARTSITE ™.

### DETAILED DESCRIPTION OF THE INVENTION

The system of the invention comprises three sub-systems that together provide the functionality to operate effectively.

Table 4, at the end of the description, contains definitions of terms used in the following description, including categories of users.

The first sub-system is known as STARTNET ™, is written in JAVA ™ code. It is a network based product that sits on a START-GLOBAL ™ computer server and is available to authorised users. It is a multi project tool so one person working on numerous projects can access all his projects without entering and re-entering the system.

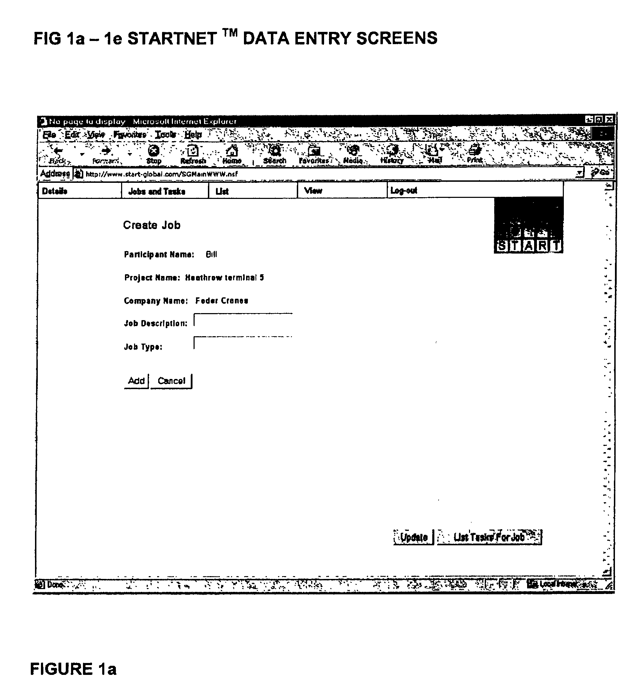

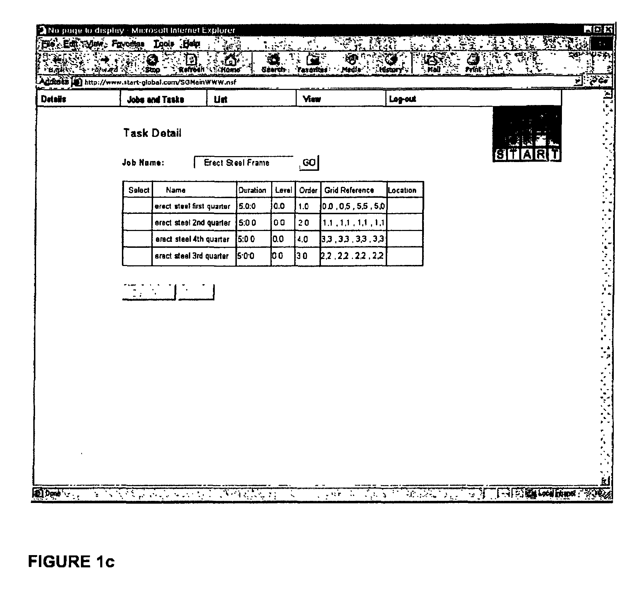

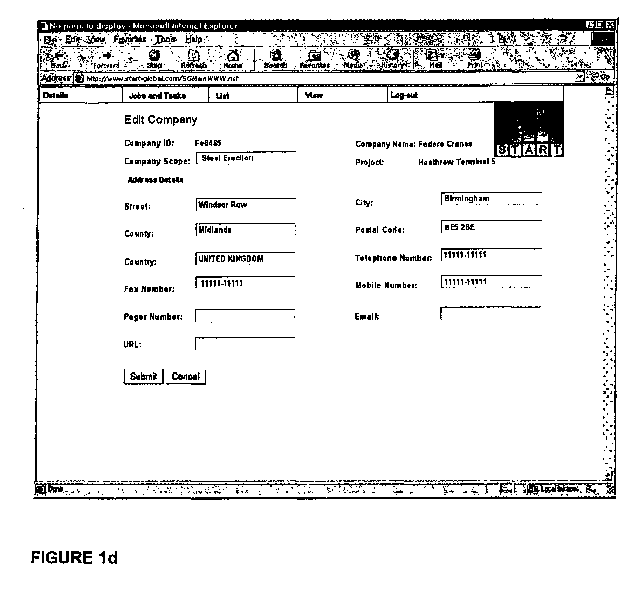

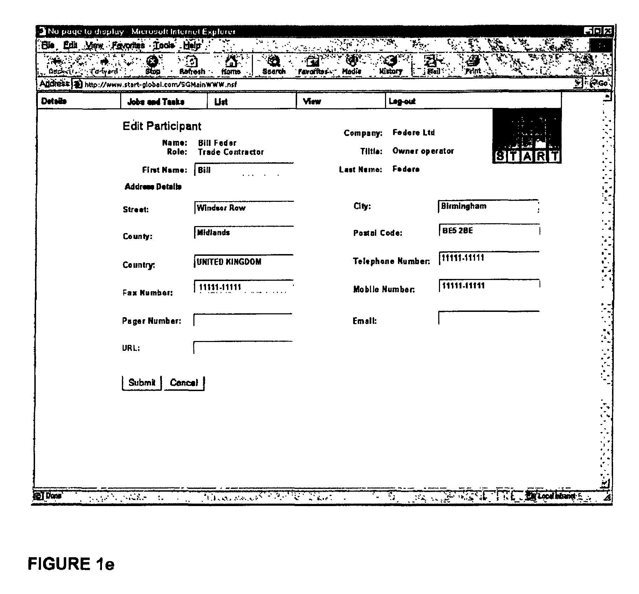

STARTNET ™ provides project contributors, such as trade contractors with data entry screens that allow them to identify, describe and input all their defined jobs (for definition see Table 4) with a job duration and the tasks that have to be performed within those jobs. Typical screens presented to the user are shown in Figures 1a to 1e. Each contractor works initially on his own contract package.

For each task forming part of a job a project contributor typically allocates space in which he will need to work, defined in terms of a cell or a plurality of cells; in this case cuboid shaped cells. The cell nodes are defined using a grid reference system (Xn, Yn, Zn). This grid is superimposed upon a two or three dimensional model (see description of third sub-system below) of the structure.

A project contributor can specify whether a task requires particular work space exclusively or whether it can be shared with another at the same time. Figure 1a shows the "Create Job" screen within STARTNET ™ for creating a new task for an "exclusive job" ("Erect Steel Frame"). Thus, Figure 1a shows details of the Task 1 ("erect steel first quarter") of expected duration 5 days taking place at level (Zn) 0.0 within a two dimensional rectangular grid; the corners of the grid being located at (0,0) (0,5) (5,5) and (5,0). Thus, for example, location (5,0) corresponds to an x co-ordinate value of 5 and a y co-ordinate value of 0.

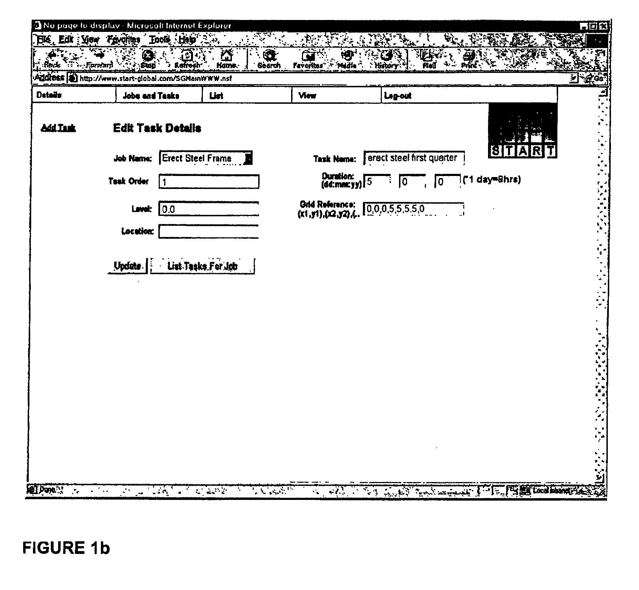

Figure 1b shows how data created using the above screen (Figure 1a) can be reviewed for a plurality of tasks (in this case 4) listed according to their sequential order.

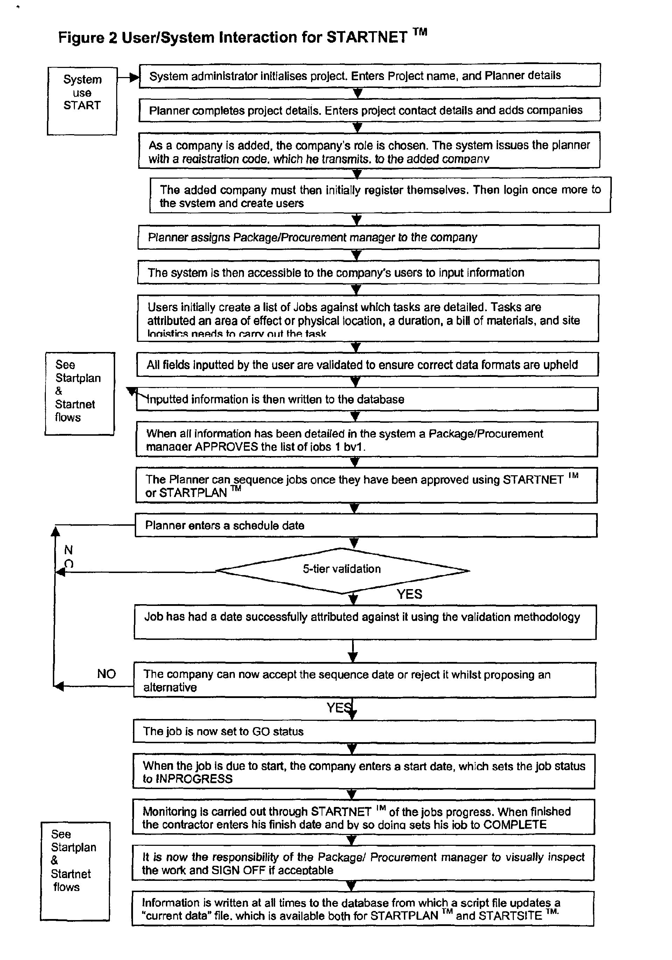

Figure 2 shows interactions between users and the system via STARTNET ™.

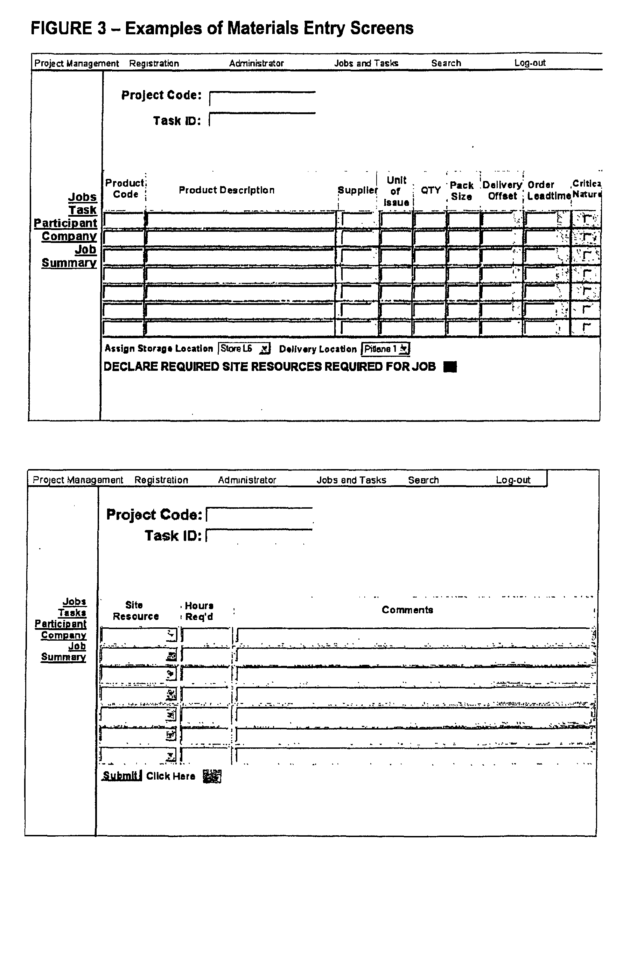

Once a contractor has identified the jobs and tasks, he completes a bill of material section for each task (see Figure 3) to state the material and man-hour requirements and supply information.

A completed data file incorporating the above contributor data is then submitted to the STARTNET ™ sub-system located on the START-GLOBAL ™ computer server. This data is visibly job by job (each job initially having a red "indicator") to the package manager who reviews the submission and checks he is in agreement with the proposals. Once the package manager "signs off" a job its indicator turns to yellow. The job is now in the queue for sequencing by the planner.

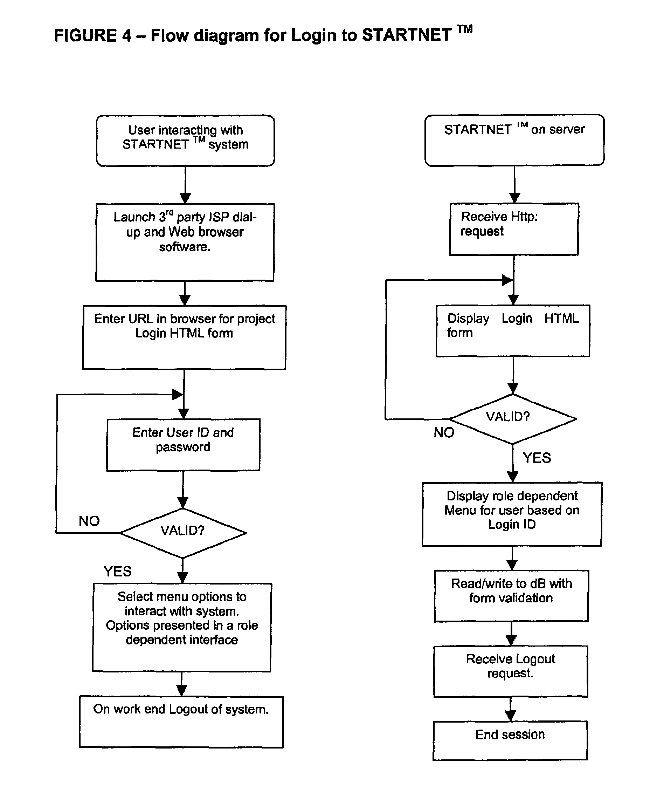

Figure 4 is a flow diagram showing remote and local login logic for the STARTNET ™ sub-system. Users commonly access the system using a Web Browser; a URL (Uniform Resource Locator) points the user to a Login page and then by entering an issued username and password, which identifies them in the system, and to the system and allows them role dependent access.

The second sub-system is known as STARTPLAN ™, which allows the planner to develop broad views of the timings of key events, and update STARTNET ™ accordingly. The planner may do this either directly or through the contractors and then move planned site activity forwards or backwards using STARTPLAN ™ as a manipulator of a single job, a group of jobs or tasks, or en bloc; for example, to reflect 3 days lost for poor weather.

In the background of STARTPLAN ™ sits a contractor priority data, known as a "Contractor Priority Table" (see Table 1), which shows contractors once they have inputted their participation details. When any project contributor; for example, a contractor labels a job as a priority over another using STARTNET ™ (see above) STARTPLAN ™ places the contractor in chronological order for use of that space, according to this declared priority. The priority table will be over-written by a directing person, normally the planner using STARTPLAN ™, if it does not adequately reflect the site priorities. As each trade signs up they are added to the end of the Contractor Priority Table and it is for the planner to move them up to the correct position in relation to project sequence. The order of priority will be checked when a task is assigned "exclusive" status.

The third sub-system, known as STARTSITE ™, is a 3D graphics system. It allows an architect or designer to translate his drawings electronically or by CD or through drawings into a 3D representation of the structure. Here games technology is used to make the representation of the structure or site, totally transparent so that the user can "look through" the structure and see the furthest point. In addition, key features as agreed, with for example the architect, such as stairs, cores, cranes can be shown.

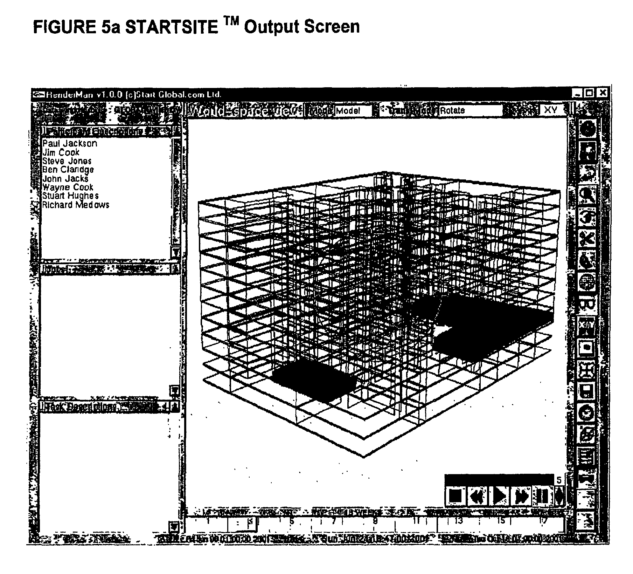

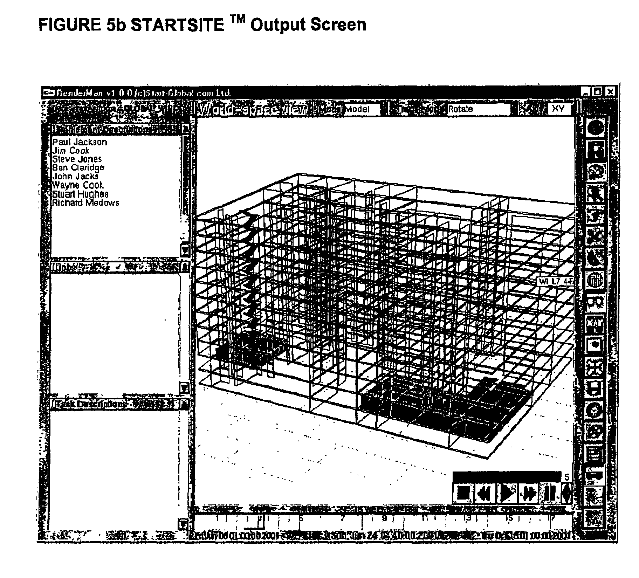

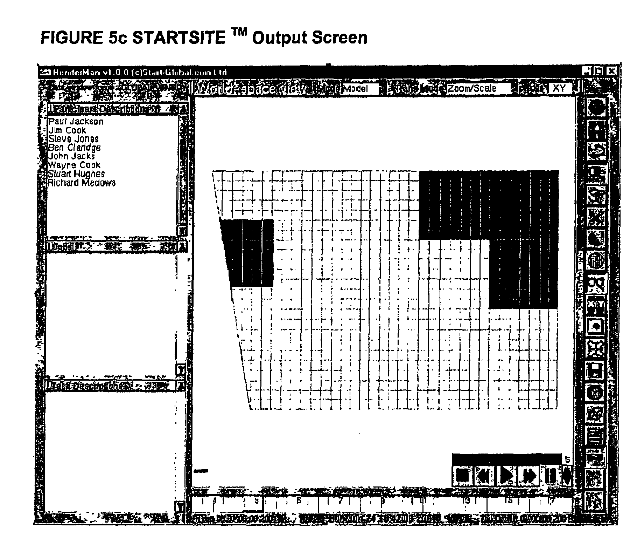

STARTSITE ™ allows the representation of the structure and/or the grid to be rotated and spun (see Figures 5a, 5b) and a zoom allows the user to home into a specific point on the grid. The structure can be cut across or as a section (see Figure 5c).

The representation of the structure preferably sits on a horizontal and vertical grid system (see Figure 5a) created by STARTSITE ™ and this representation closely corresponds to the architect's or designer's original specifications. This has grid co-ordinates attached that allow specific orientation. This is an important feature as the grid may include tens of thousands of cells (for example; cuboids) that define work space for the project. All work that happens in or on the structure is then understood by users of the system in terms of the space it occupies.

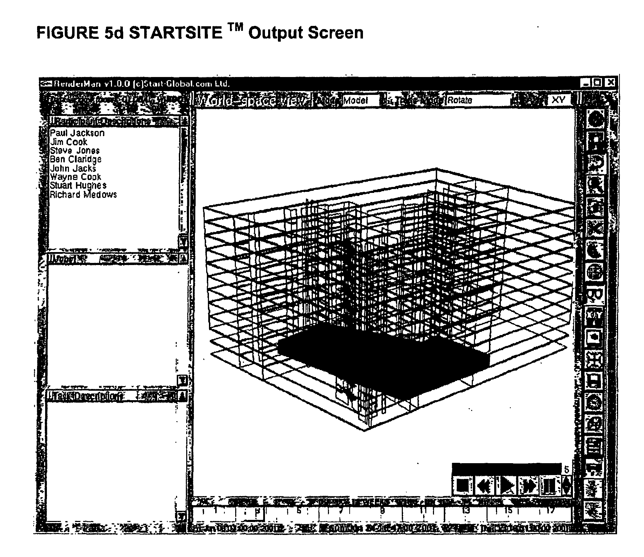

A time bar is provided at the bottom of the screen output of STARTSITE ™ (see Figures 5a to 5d) so that any time within the time period of the bar can be selected by a user to view activities at that time. This allows a user to understand what is happening in any location at any time through:-
1. The indication of the area in the model (see highlighted cells in Figure 5a) for the given time band and with the unique symbol of the contractors working in that space,
2. A dialog box on the same screen (see Figure 5d) that describes the exact job taking place at that time and the tasks that have to be performed to allow that job to be completed. This information is available for any combination of time, space, and contributor.

STARTSITE ™ is the only sub-system that displays information in a 3D graphical environment. A model is created using a third-party 3D CAD package, such as AUTOCAD ™, TURBOCAD ™, 3D ™, STUDIO MAX ™. The model is created using named objects as defined in naming conventions (see Table 3). The model represents user selected elements of a structure to give the user spatial awareness. These features may be just major features such as walls, windows and stairs or may include much more detail. When a model has been completed it is normally saved as a *.wrl file format to be read by STARTSITE ™. STARTSITE ™ is issued to new users with the model file (representation) included in its operating directory. A plurality of remote STARTSITE ™ running on PCs may be linked to the server to show the latest agreed sequence of activities on site.

STARTSITE ™ reproduces selected data entered through STARTNET ™ and displays it in three windows down the left hand side (see Figures 5a to 5d). Each entry can be right clicked to bring up further information. The jobs and tasks attributed to grid references (see Figure 1b) now appear as the blocks of colour. The coloured elements within the screen (cells) can be made up in any shape; for example, cubes, right prisms and hexagonal cells. Therefore, the grid can always truly describe a job location. The time period in which they exist is shown at the bottom of the screen. Users can interrogate the data by also selecting a time period to show as well as by level in the building. Dialog boxes exist for these selections to be made.

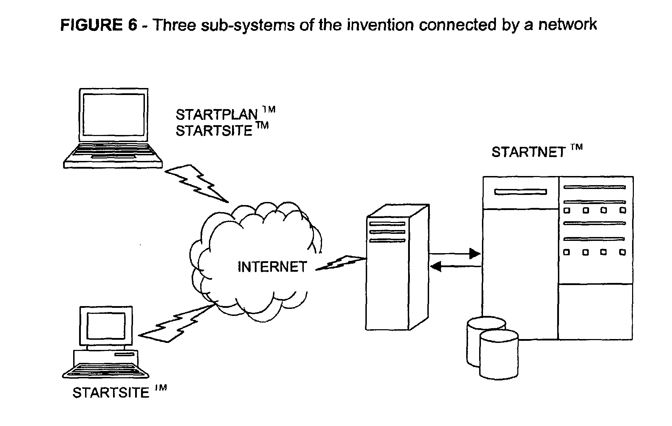

Figure 6 shows the elements of the system of the invention and a method by which users interface with the system to achieve a controlled environment. The system comprises a server 10 on which resides the database 12 and STARTNET ™ software. This is accessed by all users of STARTNET ™ via a network such as the World-Wide-Web (Internet) using dial-up connections provided by ISP (Internet Service Providers). The server 10 may be connected to the Internet on a permanent connection through a firewall 14. All processing of user interaction with STARTNET ™ is carried out on the server with the results displayed in the users Web browser. The sub-systems are preferably run on Microsoft ™ PC operating systems. STARTNET ™ may sit on a normal PC, acting as a server, and once created master data files used by all three sub-systems may be downloaded via a network to a plurality of individual user PC's. The 3D representation (model) is the same for all participants and any data updates are automatically sent to any remote users whenever they log in.

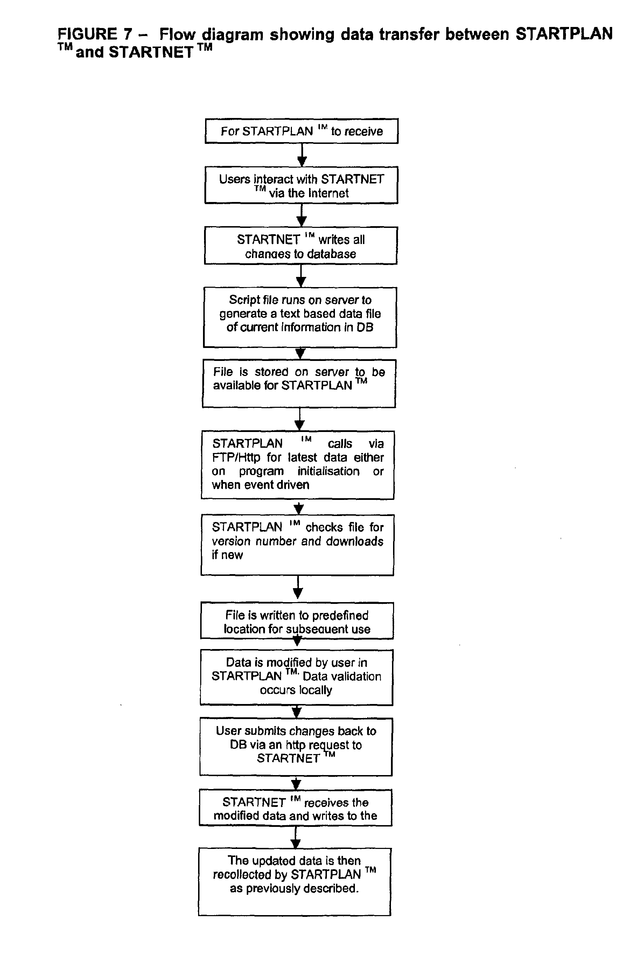

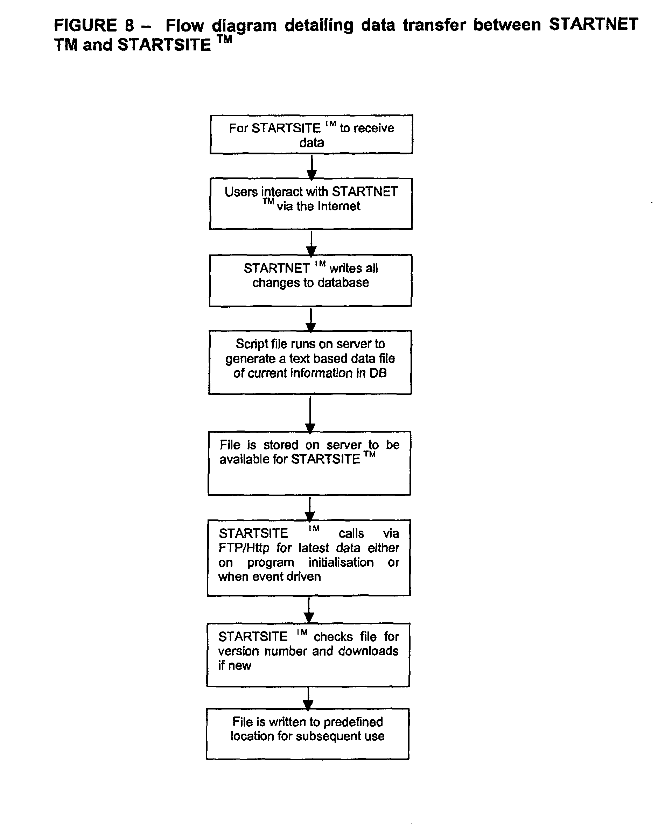

Figure 7 details data transfer between STARTPLAN ™ and STARTNET ™ and Figure 8 details data transfer between STARTNET ™ and STARTSITE ™.

There follows a description of how the system and method of the invention may be used:

To create the model an appropriate person will interact with the commissioning architects or designer will be required to make available plans either in printed paper format or as a computer file that will reconstructed in-house to provide a suitable model. The model will be faithfully accurate to the architectural plans at all times.

STARTPLAN ™ allows the planner to work in STARTSITE ™ in a special set of files similar to a normal project management suite using well known "Gant" or "Star" charts. Using this, the planner reviews the jobs and places them in sequence. Once he has completed this phase he issues the project plan. This is symbolised by indicators for jobs turning to orange. All contributors are able to see this and it may stretch many months ahead.

The material management functionality allows two separate actions provided in two different input screens as shown in Figure 3. The first allows the logistics manager (see Table 4) to set up in STARTSITE ™ all aspects of the site infrastructure requirements and lay down a "green carpet" to show where material should be placed on site and the route to be followed to get it there. It also reserves equipment that may be needed to carry the goods; for example, 2 hours or crane time.

If a contractor "tags" an item as design or supply critical, it causes the completion of job entry screens by the designers and suppliers to show when and what they are doing to ensure that those materials will be available at the required time. The failure to meet a critical path timing will cause the system to automatically review and re-time the assembly job in question.

Once the project sequence is issued, real site activity may start. The planner will turn indicators green some time earlier to confirm to contractors that they should be on site on such and such a day and time. They can request a review for which the indication system turns to green and orange, but once that review has been completed a final agreed green indicator is switched on.

The contractor is now required to follow the plan. The confirmation process may be supported by direct messages; for example, through E-mails and WAP phones. The contractor starting on the due date sends a message to say he is starting. The indicator turns to blue. Failure makes the green indicator flash to indicate a failure to plan. There is a provision for contractors to update daily at task level until the job is completed. The indicator now turns to grey. Grey is the signal for the quality controller to approve the completed job, which then moves into history and signals that the contractor has completed the job and should be paid.

Archives files are held on the server of all the site decisions and actions. There is a complete management reporting suite provided to indicate efficiency and output performance.

STARTPLAN ™ may be installed and run at a location remote from the server (see Figure 6). It is intended for use by a single user (normally the planner) responsible for project scheduling. Thus, STARTPLAN ™ may be distributed by Internet download from a server in the format of a self-executable. STARTPLAN ™ receives data in a formatted text file format created by STARTNET ™ stored in the database. This data is then manipulated locally using identical validation techniques to STARTNET ™ after which the information is resubmitted to the database using the Internet in order to make changes to the database data.

STARTSITE ™ is also typically distributed by the server 10 through a network such as the Internet in the format of a self-executable. It is pre-installed typically with a 3D model depicting a project workspace. STARTSITE ™ regularly receives updated data files from the server to display project information as inputted by users. The data file is generated from the database 12 and is sent via the Internet to a predetermined location in a formatted text file format, which is then read by STARTSITE ™ and displayed to the user. STARTSITE ™ prompts for updated data files to ensure concurrency of data.

STARTSITE ™ may also be installed and run on local machines.

The invention represents a new process approach for project management and very importantly in a medium that has never been used before. Its shaping of the industrial process is important in that if followed it will dictate the best approach to a major project and deliver substantial cost savings; especially if the inputs are quality checked before the project begins. In a regular production environment, it will implant standard process times and irrespective of where a contributor works, he will be required to work to a pattern that conforms to the requirements of the total project. The enhancements in planning and communication allow the industrial process to be properly co-ordinated and efficient.

The system of the invention may have the following attributes:
- The creation of a precise computer 3D model of the construction with key features such as toilets, cores, stores, atrium and hoists,
- The model is a fully transparent object built on a suitable grid system,
- The model can be seen from all sides as well as any position within the structure,
- The model can be communicated through the Internet to all trade contractors, safety engineers, planners, suppliers, consultants and investors employed on the project,
- The contractors use the system to decide the content of each job within the work package and to show their proposals to other trades,
- Each trade is allocated a specific symbol to allow identification of work by grid location and hourly time period,
- Text files describing the work are cross-referenced to the work shown by the symbol in the grid at any point in time (see Figure 5d),
- All work proposals from all contractors are viewed and arranged through one central system and the best work sequences decided by the planner,
- Confirmed work plans are communicated back to all contributors,
- Contractors carrying out work register their start and finish dates in the system in line with the agreed plan,
- All failures to meet plan remain highlighted until a resolution is agreed in the form of a new plan that is immediately re-circulated,
- Intelligent data stores sit behind the system to help trades create their best planning proposals, such as best standard process time or information templates.
- All materials, equipment and personnel requirements needed to perform each job are identified and may be ordered automatically upon confirmation of the job start within the plan.

**Table 1**

| **Contractor Priority Table** | | | |
|---|---|---|---|
| Priority | Contractor ID | Name | Trade |
| | PMD | | Demolition |
| 2 | HDJ | | Piling |
| 3 | FBE | | Steelwork |
| 4 | EHJ | | Decking |
| 5 | BFD | | Concreting |
| 6 | | | Etc |
| 7 | | | Etc |
| 8 | | | |
| 9 | | | |
| 10 | | | |
| 11 | | | |
| 12 | | | |
| 13 | | | |
| 14 | | | |

**Table 2 -**

| **Building Description** |
|---|
| **The building has a number of "overall" variables:** |
| 1. The number of floors. |
| 2. The size of the grid |
| 3. The number of cores |
| 4. The number of stores |
| 5. The number of pit lanes |

| **Floors** |
|---|
| Each floor has its own grid. |
| Associated outer walls (shell walls) |
| Associated inner walls / partition walls |
| Stairs / stairwells. |

| **Features** |
|---|
| Cores |
| Stores |
| Pit lane |
| Stairs |
| Stairwells |
| Risers |
| Atrium |
| Toilets |
| Hoists |
| Cranes |
| Grid |

| **Grid** |
|---|
| Pre-Defined size (x,y) |
| This is where the actual tasks take place. |

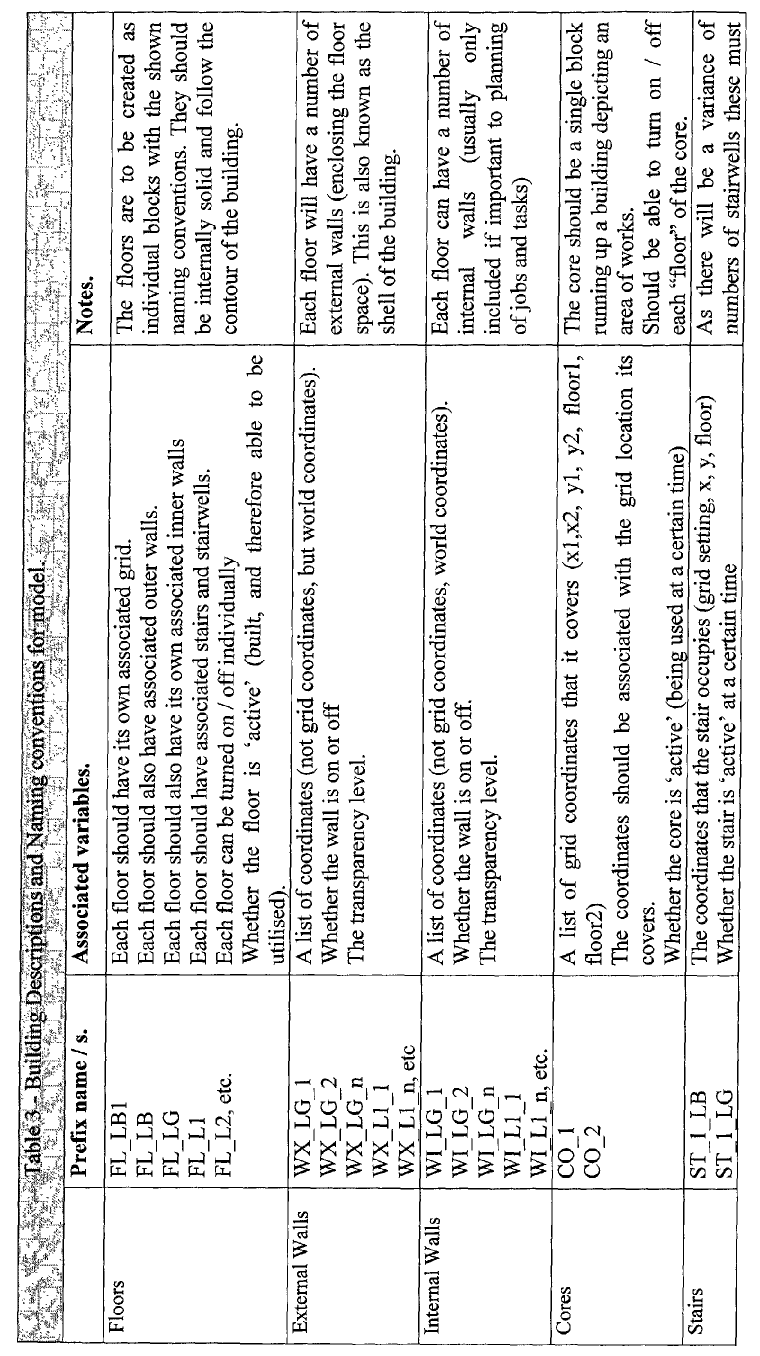

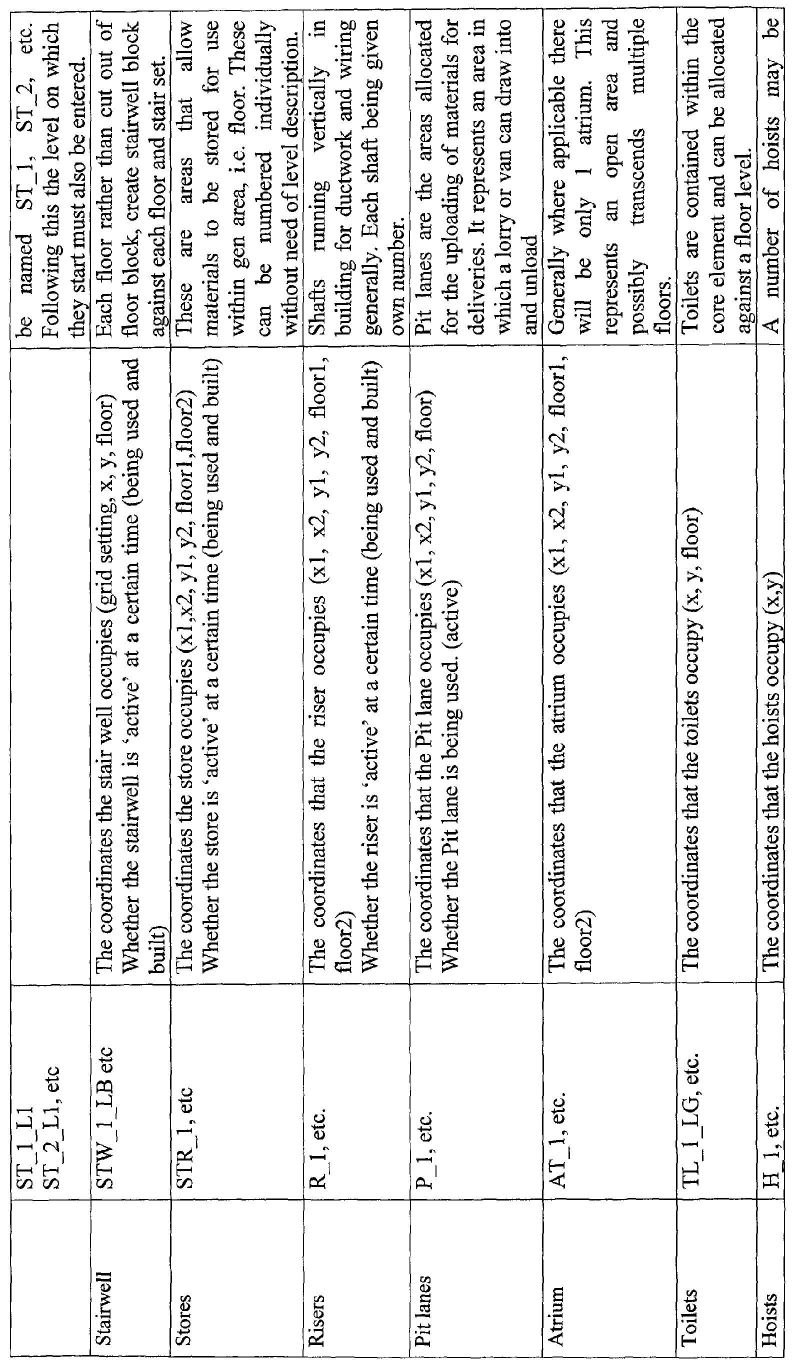

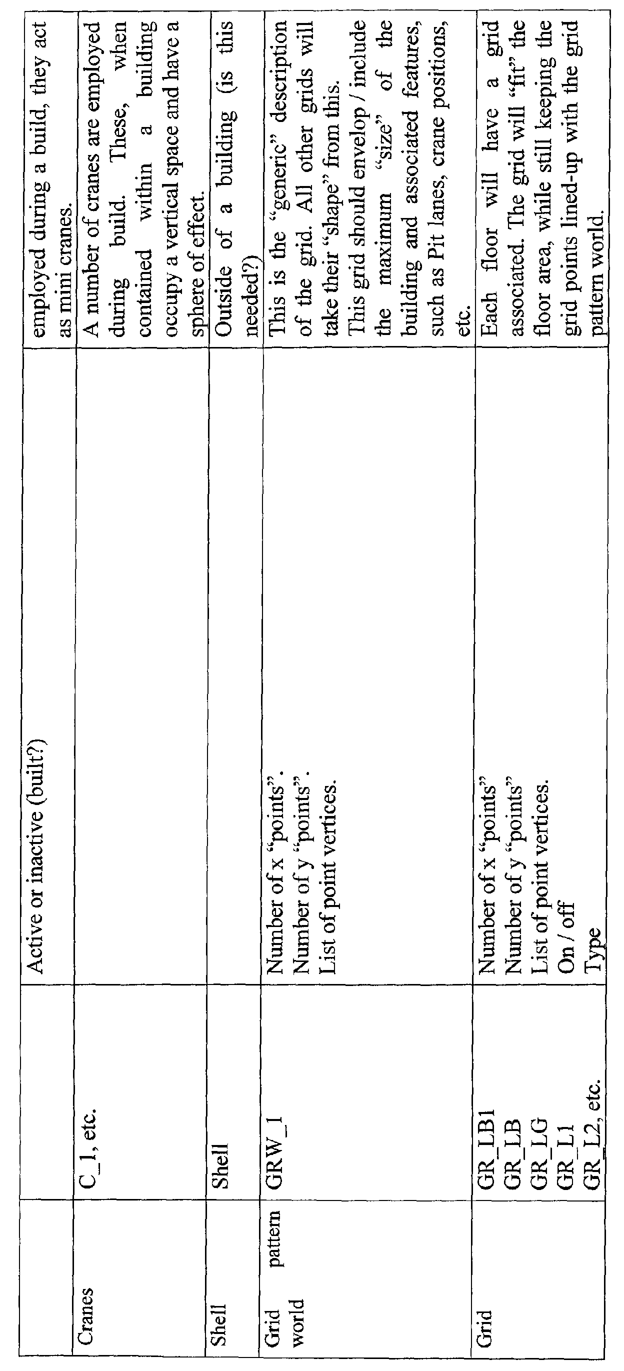

An example of the data fields which could be provided to receive the inputted data for the system is set out below:

| JOB DATA | |
|---|---|
| Job ID | integer |
| Job Description | text |
| Job type | 0-5 |
| Job priority offset | (1) or (-1) etc |
| Task ID | integer |
| Task Description | text |
| Level | LG - level ground |
| Location | drop down list (Core) |
| Grid Ref | (0.11,0.23),(1.25,2.01),(0.34,0.12) |
| Duration | dd/hh/mm |

| MATERIALS DATA | |
|---|---|
| Product Code | text |
| Product Description | text |
| Supplier name | text |
| Unit of Issue | integer |
| Quantity | integer |
| Pack size | integer |
| Price/unit | £ |
| Delivery offset | dd/hh |
| Order lead time | days |
| Design Critical | check box |
| Supply Critical | check box |
| **Quantity adjustment factor %** | **%** |
| | |

| | **Delivery DATA** |
|---|---|
| Feed route (green carpet) | drop down list |
| Storage location | grid ref or predefined stores |
| Delivery location | drop down list detailing pitlanes |
| Equipment required | drop down list detailing site equipment available |
| Duration | dd/hh/mm |

| LABOUR DATA | |
|---|---|
| Grade of Labour | A-Z |
| Number of Hours | integer |
| Team | A-Z |

| EQUIPMENT DATA | |
|---|---|
| Equipment type | drop down list detailing site equipment |
| Duration | dd/hh/mm |
| Job start offset | +2 etc |

### Table 4 - Definitions

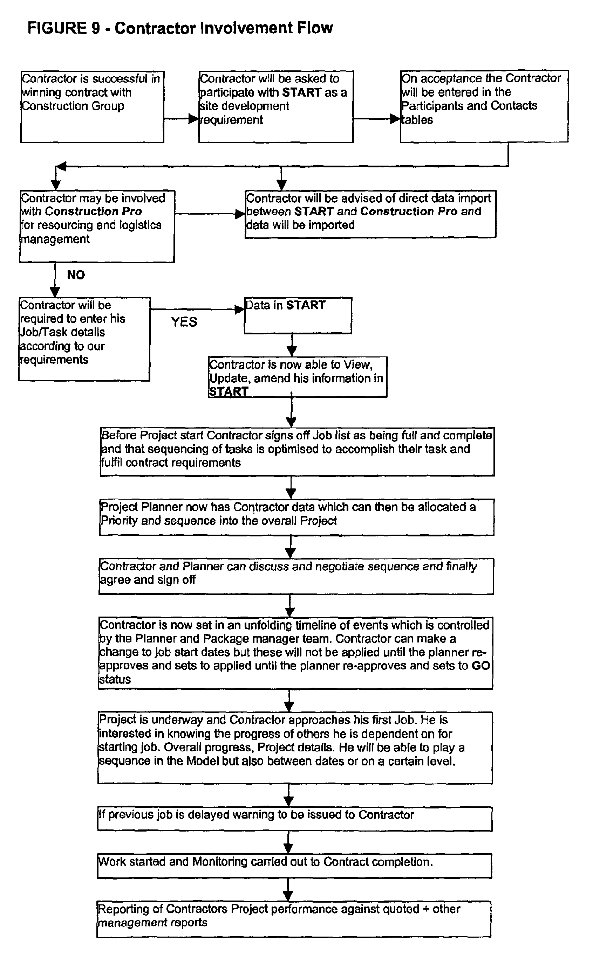

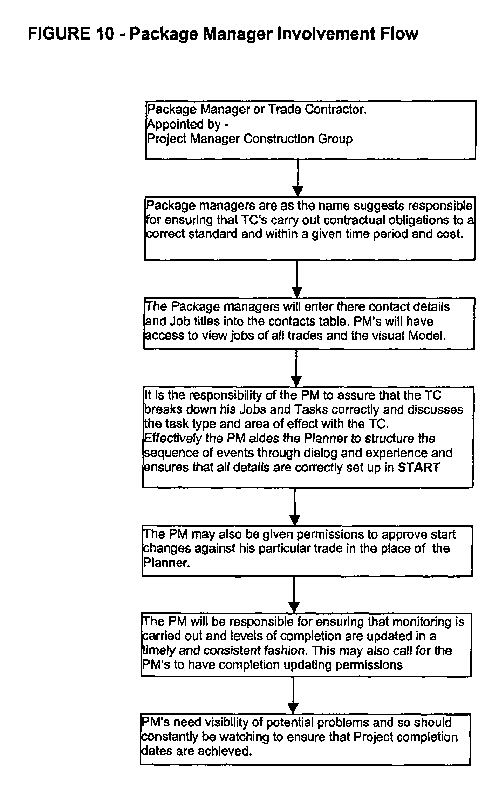

**1. Control of information** - movement of start dates must take place using the encompassing job level. This allows dependencies to be set on tasks without breaking task flow.
2. **Jobs -** Jobs can be defined as an element or part of work which encompasses either one or many tasks. Jobs can be carried out on multiple floors and locations although a location is not attributed to a job. A job description will relate in few words the precise nature of the job ie type of work (install, test, weld, pour, erect, etc) and the type of material being used (brackets, concrete, steel, wiring, ductwork, controllers, etc). Jobs are attributed a start date. Jobs inherit duration from tasks total duration.
3. **Tasks -** these need to be assigned to "types" (e.g. Delivery of materials, exclusive work, non exclusive work) this allows for control in permissions i.e. can two different jobs tasks be done in the same place at the same time. In some circumstances this is not possible i.e. 2 exclusive type tasks may not occur same place same time. The type assigned as deliveries is provided to create a segregation and to be used as a search criteria. Each job made up of tasks will have deliveries detailed against the materials they list and this becomes a consideration attributable to whether or not a job can be sequenced. 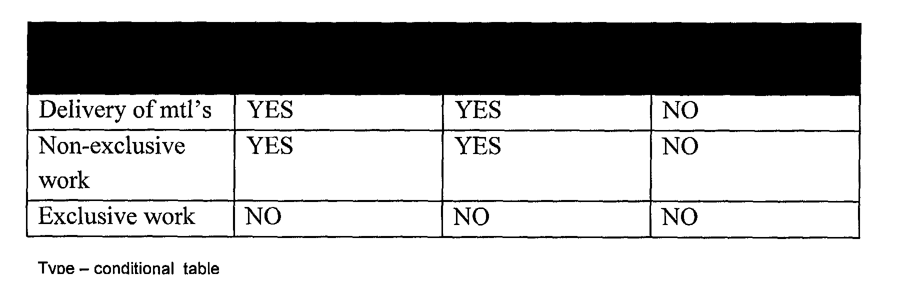
   Tasks can be defined as a sub-job, a task cannot exist without a job, one or more tasks make up a Job. Tasks are elements of jobs and therefore inherit the general purpose of the job to which they belong. Each Task belonging to a job can be can be carried out in a different location i.e. on different floors but each Task should be defined as a single location or grid range. A Task is given a duration and is entered in the sequence of execution. The combined duration of tasks will define the Job duration. Tasks should be undertaken to be completed in one continuous time period. Task are not given start dates but do inherit one from the job start and position in task sequence where durations are added together.
**4. Task types**
   Delivery of materials - this would signify the delivery of product either to an allocated store or to the work face. Duration can be applied and would represent the amount of time required to use the product against a task and would need to remain on for that given period.
   Exclusive work - this would represent typically the full room or stipulated area. This type of work would require that no other work be allowed to start within the duration of this job's task.
   Non-exclusive work - this would represent work of a low impacting nature i.e. a small task like installing a set of brackets as opposed to the laying of concrete for instance. The nature of tasks would have to be assessed on occasions where 2 or more non-exclusive jobs tasks are taking place.
   Sequenced work - this work must be carried out in sequence according to the contractor priority table for the future operators may be applied to allow offsetting (i.e. +2-2).
   Testing - testing, safety issues, surveying work can be represented also to add in an additional element of control for Health and safety (customers potentially)
**5. Priority levels -** These need to be assigned by the planner on trade contractors. This is a useful and powerful control mechanism for us. Priorities will act as flags for conflict detection. Priorities are set on contractors in a "natural sequence" i.e. what is the first job on the site and by whom will it be performed, that contractor will be assigned priority 1 etc through to the last contractor who naturally carries out finishing works. The response to a priority violation needs to be as a warning flag to require authorisation to proceed but once authorised it should no longer require reconfirmation. Priority checks need to identify task level clashes but then require 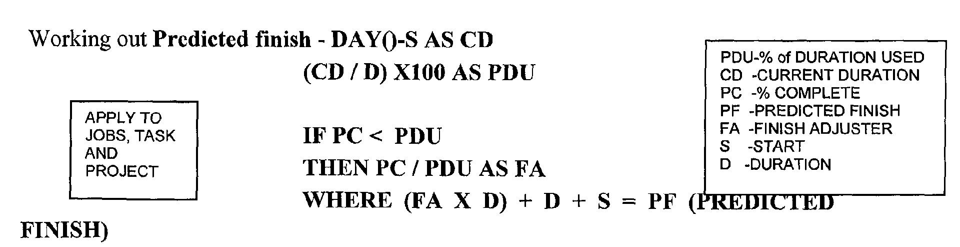 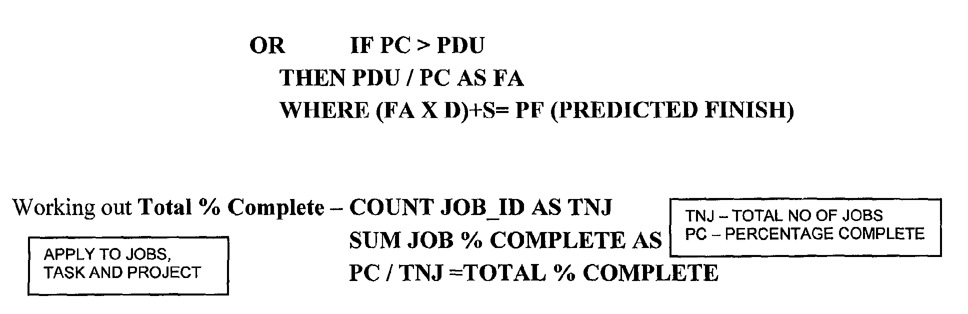
**6. Location -** A location can be defined as a contiguous area existing on a single level. Predefined areas such as cores, pit lane, stores, will act as filters by representing an area or range of grid references without the use of grid numbering. This will however coexist with grid referencing which must be the primary location system.
**7. Priority levels -** This is a status assigned to the contractors as they join the project. Each contractor priority level will be set by the planner and may be updated/amended throughout the project lifecycle. The priority level with 0 being the highest, dictates a natural order of precedence that when combined with task types can be used to ensure precedence is not broken on site.
   **HOLD -** Job having been entered into START, awaiting approval by package manager
   **APPROVED -** Job that has been reviewed and subsequently approved by package manager
   **SEQUENCED -** Job placed into sequence from either APPROVED status or TBA status
   **TBA -** Job that was sequenced but could not be undertaken as required. A new proposed start date is submitted
   **GO -** A job that has been accepted by the trade contractor having been sequence by the planner
   **INPROGRESS -** A job that has been started
   **COMPLETE -** A job that has all associated tasks monitored as 100% complete
   **SIGNED OFF -** A completed job that has been verified as complete by package manager
**8. Types of User**
   The system provides for input by the following users:
   - Contractor who are selected to perform a part of a total project either for a limited duration or for a particular skill his company provides. They create their own proposals on how best to do their work and then makes the proposals available to the project management team (see Figure 8).
   - Package or procurement managers who has expertise in the particular trade and are able to judge the quality of the proposal in terms of method, resource, duration, etc and influence the final decision on what actually happens (see Figure 9).
   - The planner who orchestrates all the submissions deciding ultimately who works where, doing what and when all the time ensuring proper synchronisation of the total project (see Figure 10).
   - Logistics managers who feeds off the trade contractor submissions to determine the best infrastructure and mechanical support for the project including the receiving, movement and storage methods
   - Quality, safety, town planner officials who have sight of the project and can intervene at any time to give approvals to allow the work to continue
   - The developer who has total overview and is fed with information constantly that keeps it informed of issues and problems and progress against plan.
   - Material suppliers who are given a Bill of Materials by job and are able to determine in collaboration with their customers the best way to assemble and deliver materials into site in a way that avoids damage, bottlenecks and waste.
**9. Hierarchy and participant definitions**
   **Property Owner**
      This is the project instigator, typically a corporation, the property owners contract manager will be interested in viewing his current development status of either a single or multiple sites.
      Information required to be accessed - site-by-site project details i.e. location address site director details contact telephone numbers. He would also like to know simply the status of the build in terms of overall level of completion and whether on target or behind schedule.
   **Property Developer**
      The company awarded the contract to manage the site development; typically they will manage the overall makeup of the structure working to agree a specification and a cost. They will commission the architects and engage a construction company to carry out the build.
      Information required to be made available, typically view of all of the companies projects specified level of completion, actual level of completion and project details.
   **Construction Group Director**
      The head of the Construction Company or group carrying out the build and managing sub-contractors etc.
      The group director would typically require to know the status of each construction task that their company were using the software with to again see build schedule and actual level of completion without needing detail or model software.
   **Project Director**
      This man works for the construction group and is their top man, he is hands on visiting and spending a significant proportion of time on site but also head office. He is ultimately responsible for actioning and implementing and authorising activities concerned with the overall site.
      The information required by the project director would be view only but would allow him to view all jobs/tasks, and their proposed install dates as well as levels of completion of each trade and the cumulative site progress. He would use the viewer to identify and discuss activities with the planner and site and logistics managers, and carry out performance reviews.
   **Planning Manager**
      This person is employed by the construction company or main assembler and is charged with devising a program/sequence to carry out the structures construction. The planner will discuss at length the building specification both with the architects, engineers, and trade contractors. The resulting information allows the planner to choose a build strategy that best suits the operating conditions. The planner will take into account, crane times etc before coming to a conclusion.
      The planner will need to have visibility of all jobs/tasks on both a monitoring and sequencing level as wel as the provision to move planned task start dates and approve new date submissions. He will need to be warned of potentiel non-completions and clashes in activities.
   **Site Manager**
      The site manager is employed by the Construction Company and works closely under the project director acting as the enforcer of policy, standards, contractual obligations, and general site matters.
      The site manager will need to view by contractors and/or tasks and/or location. He will also need to view levels of completion and task status information. He will not however be able to change information. He will also need access to contact info for project etc.
   **Logistics manager**
      The logistics manager, is appointed by the company contracted to supply materials to site as and when required by the work flow
      He already knows what materials are required for each declared task; he simply needs to have visibility of when those tasks will take place.
   **Trade Contractor**
      The construction company will sub contract elements of the build to specialist contractors known as trade contractors. The trade contractor will be selected through competitive tendering. They will then be asked to produce plans to show exactly (quantify) what they will undertake to do. These plans are draughted on top of the original architects plans and use the same grid referencing procedures as the architects. They describe each of their jobs and then break those down into tasks against which they associate a duration and natural sequence. The task lengths are discussed and justified as being achievable with both the planner and the package manager. The planner will set the trades in sequence and they will from that point be committed to achieving targets. They will be able to make date change proposals and ask for these to be authorized by the planner or package manager.
      The trade contractor will need to submit his details (company) and contractual i.e. (work type - electrical lighting and power.) see attached sheet. He will then need to either enter or update jobs and tasks and allocate a task type and location. He should not have to enter a start date but if the task were new it would be put on a hold status for the planner to integrate into his plan. The contractor would then need ongoing visibility of his own tasks and those of others around him. The aspect of monitoring their own productivity will require that a completion status update mechanism is needed.
   **Package Manager/Project Manager**
      The package manager is appointed by the developer to oversee a trade contractor or several trade contractors. The package manager is responsible for ratifying materials, durations, equipment etc. He is also responsible for verification of onsite works and will sign off completed work having made a visual check for completion. He works alongside the planner but does not have sequencing rights, he simply has approval rights and sign off rights on job completion

## Claims

1. A computer-based project management system, for use in controlling the assembly of structures, comprising three software sub-systems; a first sub-system that receives data relating to an individual task of a construction project; a second sub-system, for project scheduling, that allows a planner to view and modify the timing and inter-relation of key events and a third sub-system that converts data from the first and/or second sub-systems into a visual three dimensional graphical representation which allocates space in a three dimensional model of the said structure(s) to the task, as an event in time.

2. A system according to Claim 1 wherein the data relating to an individual task includes a task description, task priority information, where the task will be carried out, and how long it will take

3. A system according to any preceding claim wherein the three dimensional graphical representation comprises a horizontal and vertical grid system used to define many cells wherein each cell or a collection of cells defines a work location for the construction project.

4. A system according to Claim 3 wherein a cell or group of cells is marked with a unique symbol used to identify the contractor working in that/those cell(s) during a selected time period.

5. A system according to Claim 3 wherein text files describing the work are cross-referenced to the work shown by the symbol in the grid and a caption that describes a job taking place and the tasks that have to be performed to allow that job to be completed is displayed beside the three dimensional graphical representation.

6. A system according to any preceding claim wherein a time bar is displayed beside the three dimensional graphical representation so that a time period can be selected by a user to trigger an enquiry to allow the user to see what is happening at any time during that period.

7. A system according to any preceding claim wherein the three sub-systems reside on a server computer and remote users can update data in at least one of the sub-systems using a remote computer connected to the server computer by a network.

8. A system according to any preceding claim wherein a cell or cells is used to define a sub assembly for a project which sub assembly might be in a remote location from the main project such as many miles away from the location of the main project.

9. A system according to any preceding claim wherein a cell or cells comprises data relating to facilities, associated equipment, services, movement channels and/or material planning channels related to a project, and/or location.

10. A method of controlling a project for constructing a structure using a computer based project management system comprising the following steps:-
[a] entering to a first software sub-system data relating to an individual task description that data comprising at least one of the following; task description, task priority information, where the task will be carried out, and how long it will take;
[b] viewing and modifying the timing and inter-relation of data relating to key events using a second software sub-system;
[c] viewing as a three dimensional graphical representation, space allocated to a task as an event in time, using a three dimensional model of the structure displayed by a third software sub-system.
